# EUROPEAN PATENT SPECIFICATION

(11) **EP 2 815 029 B1**
(45) Date of publication and mention of the grant of the patent: **01.02.2017**
(21) Application number: 13704089.5
(22) Date of filing: 11.02.2013
(51) Int. Cl.: E01C 23/088, B28D 1/18, E21C 35/18, E21B 12/02

(54) **PICK TOOL AND METHOD OF USING SAME**
MEISSELWERKZEUG UND VERFAHREN ZUR VERWENDUNG DAVON
OUTIL D'EXTRACTION ET PROCÉDÉ D'UTILISATION DE CET OUTIL

(30) Priority: 14.02.2012 GB 201202533; 14.02.2012 US 201261598644 P
(43) Date of publication of application: 24.12.2014
(73) Proprietor: Element Six GmbH, 36151 Burghaun (DE)
(72) Inventor: LACHMANN, Frank, Friedrich, 36151 Burghaun (DE); RIES, Bernd, Heinrich, 36151 Burghaun (DE)
(74) Representative: Mitchell, Matthew Benedict David
(86) International application number: PCT/EP2013/052688
(87) International publication number: WO 2013/120807

(56) References cited:
- WO-A2-2011/089117
- US-A1- 2009 142 151

## Description

This disclosure relates generally to a pick tool for pavement degradation or mining, the pick tool comprising a super-hard strike tip.

International patent application publication number WO/2011/089117 discloses a pick tool comprising an insert mounted in a steel holder, the insert comprising a super-hard tip joined to a cemented carbide insertion shaft at an end of the insertion shaft. The insertion shaft comprises an insertion shaft and the steel holder has a bore in which the insertion shaft can be shrink fit. Cemented carbide materials tend to be much more abrasion resistant (but much more costly) than steel and the steel holder will likely be worn away to expose part of the insertion shaft in use. There is a risk that the steel holder may wear away to such an extent that the carbide insertion shaft becomes dislodged from the bore in use, damages other pick tools and be lost.

There is a need to provide a pick tool for pavement degradation or mining in which the risk of detachment in use of a part of the pick tool is reduced.

Viewed from a first aspect there is provided a pick tool for pavement degradation or mining, comprising an insert and a holder, the insert comprising a super-hard strike tip joined to a proximate end of an insertion shaft, the insertion shaft secured by an interference fit within a bore provided in the holder, the insertion shaft having a longitudinal axis and a distal end of the insertion shaft positioned at an insertion depth within the bore; a wear limit marker provided on an external surface of the holder and positioned to correspond to an axial distance along the insertion shaft from the distal end, the distance being at least 20 per cent and at most 35 per cent of the insertion depth.

The limit marker may be positioned on the holder so that when the holder is worn away in use to the extent that the limit marker is also at least partly worn, the pick should be refurbished.

Various combinations and arrangements of pick tools are envisaged by this disclosure, of which the following are non-limiting and non-exhaustive examples.

The interference fit may be a shrink fit or a press fit. The holder may comprise a seat at a distal end of the bore against which the distal end of the insertion shaft may abut.

The insertion shaft may comprise material that is substantially more abrasion resistant than a material comprised in the holder.

The pick tool may be for degrading pavement comprising asphalt, stone or concrete and or for breaking up rock formations as in mining, the rock formations comprising coal or potash, for example. The pick tool will be configured for attachment to a tool carrier such as a drum and may comprise a shank cooperatively configured for coupling with a fixture attached to the tool carrier. The tool carrier may be capable of accommodating a plurality of the pick tools.

The insertion shaft may comprise or consist of material substantially more abrasion resistant than a material of which the holder comprises or consists. The holder may comprise or consist of steel and or the insertion shaft may comprise or consist of cemented carbide material. The strike tip may comprise polycrystalline diamond (PCD) material, silicon carbide bonded diamond (SCD) material or polycrystalline cubic boron nitride (PCBN) material. The strike tip may comprise super-hard material joined to a cemented carbide substrate.

The insertion shaft may comprise cemented tungsten carbide, ceramic material, silicon carbide cemented diamond material or super-hard material, and the base may comprise steel. The material of the insertion shaft may have Rockwell hardness of at least about 90 HRa and transverse rupture strength of at least about 2,500 MPa. For example, the insertion shaft may comprise or consist of cemented tungsten carbide material having magnetic saturation of at least about 7 G.cm³/g and at most about 11 G.cm³/g and coercivity of at least about 9 kA/m and at most about 14 kA/m. The insertion shaft may comprise or consist of cemented carbide material, which may comprise tungsten carbide grains and at least about 5 weight per cent and at most about 10 weight per cent or at most about 8 weight per cent binder material, which may comprise cobalt. The tungsten carbide grains may have mean size of at least about 1 micron or at least about 2 microns, and or at most about 6 microns, at most about 5 microns or at most about 3 microns.

The insertion shaft may be generally columnar or cylindrical in shape and the proximate end may be generally frusto-conical.

The insertion depth may be at least about 30 mm, at least about 40 mm or at least about 50 mm, and the insertion depth may be at most about 70 mm or at most about 60 mm. The longitudinal distance may be at least about 6 mm, at least about 8 mm or at least about 10 mm from the distal end of the insertion shaft, and the longitudinal distance may be at most about 24 or at most about 21 mm. In one example arrangement, the insertion depth is at least about 50 mm and at most about 60 mm and the longitudinal distance is at least about 10 mm and at most about 14 mm.

The wear limit marker may be positioned on a side of the holder. The wear limit marker may be positioned on the backward facing side of the holder, the forward facing side being the side that will advance towards the body to be degraded in use (with no part of the holder being between the forward facing side and the body). The wear limit marker may extend at least partly around the holder from the backward facing side towards or to the forward facing side. The wear limit marker may extend circumferentially substantially all the way around the insertion shaft or part of the way around the insertion shaft. There may be more than one wear limit marker. In one arrangement there may be two wear limit markers, one for indicating a lower limit of wear and the other for indicating an upper limit of wear.

The wear limit marker may be visible to the naked eye. The wear limit marker may comprise a ridge, rib, depression, groove, boss or other visible feature on the external surface of the holder. The limit marker may be formed integrally with the holder such as by forging or it may be joined to the holder. The wear limit marker may be visible to the naked eye and or it may be configured for detection by a detector mechanism provided for this purpose. The detection mechanism may comprise an optical and or electronic detection means.

The wear limit marker should be arranged and positioned on the holder to indicate to an operator when the holder has worn in use to the extent that the pick tool should be removed from a carrier apparatus to which it will be attached, and replaced. The wear scar arising from abrasive wear of the holder will be large enough to be seen by the naked eye since a substantial volume of the holder at the forward facing side will have been removed by abrasion by the time the pick tool will need to be replaced. When the wear scar extends from the proximate end of the holder to a position on the holder indicated by the wear limit marker, the pick tool should be replaced. If the wear limit market is positioned too far from the distal end of the insertion shaft, an operator is likely to remove the pick tool from the carrier apparatus prematurely and the pick tool may not be used to the fullest extent. If the wear limit marker is positioned too close to the distal end of the insertion shaft, an operator may not remove the pick tool timeously and there may be a risk that the insertion shaft will become detached from the holder and fall out, potentially causing great damage to the carrier apparatus and or other pick tools mounted onto the carrier apparatus. This may occur because the insertion shaft is not substantially bonded to the holder, being attached thereto merely by means of an interference fit so that when a sufficient volume of the holder has worn away it will no longer provide sufficient support to retain the insertion shaft in use. The risk of excessive wear of the holder is likely to be particularly great since the strike tip comprises super-hard material having extremely high resistance to abrasion and consequently is likely to remain in working condition substantially longer than the holder or even the insertion shaft.

Viewed from a second aspect there is provided a method of using a pick tool according to this disclosure, the method including attaching the pick tool to a carrier apparatus for degrading a construction or body, using the pick tool to degrade the construction or body, examining the pick tool to determine whether the holder has worn away to the extent where a wear scar produced on the holder in use extends from the proximate end of the bore (i.e. the end from which the insertion shaft projects) to a position on the holder indicated by the wear limit marker.

The method may include removing the insertion shaft from the (first) holder and shrink fitting the insertion shaft into a new (second) holder for re-use, and or the method may include removing the strike tip from the insertion shaft and attaching the strike tip to a new insertion shaft for re-use.

The insertion shaft may experience wear in use, particularly on the forward facing side. The method may include measuring the shape and dimensions of the insertion shaft after use to quantify the extent of any such wear and the shape of the insertion shaft resulting from it. In some examples, at least a part of the insertion shaft on the forward-facing side proximate the strike tip may be lost to abrasion and the thickness of the lost part may be at least about 0.1 mm. The symmetry of the insertion shaft will likely have been reduced by abrasion in use, since the abrasion is likely to occur unevenly. The method may include processing the removed insertion shaft to refurbish it for re-use, for example by grinding such as by using a centreless grinder. This will have the effect of reducing the diameter of the insertion shaft compared to the original diameter prior to the abrasion. For example, the diameter of the refurbished insertion shaft may be at least 0.1 mm, 0.2 mm or 0.4 mm less than the diameter of the insertion shaft prior to use and consequent abrasion. The method may include providing a second holder having a bore configured to accommodate the refurbished insertion shaft (for example the bore of the second holder may have a correspondingly smaller diameter than that of the first holder).

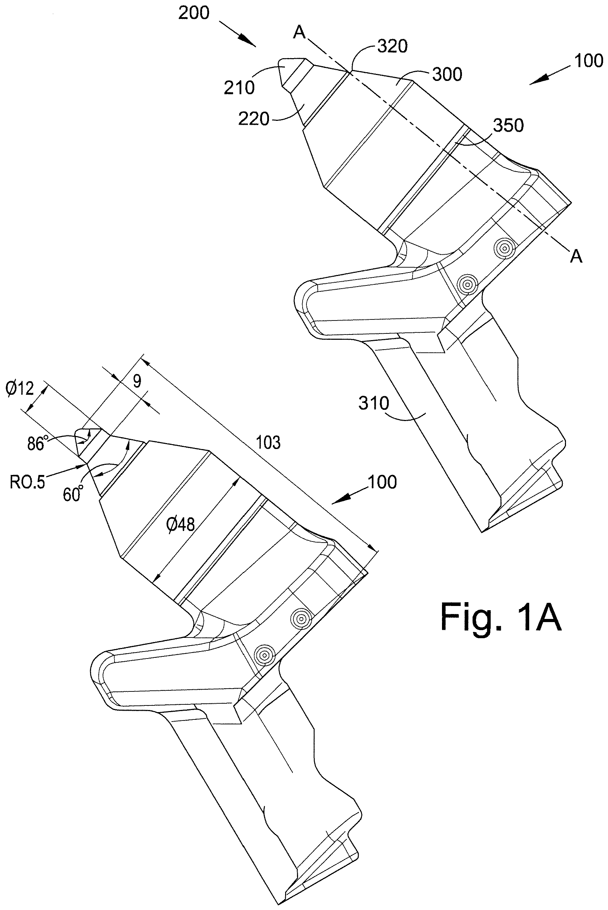

Non-limiting example arrangements of pick tools will be described below with reference to the accompanying drawings of which
Fig. 1A shows schematic side views of an example pick tool, the lower drawing including dimensions;

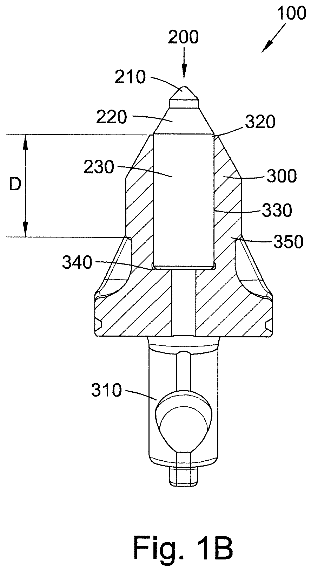

Fig. 1B shows a schematic rear cross section view of A-A in the example pick tool shown in Fig. 1A
Fig. 1C shows a schematic side view of the example pick of Fig. 1A in a worn condition.

With reference to Fig. 1A and Fig. 1B, an example pick tool 100 for road milling or mining comprises an insert 200 and a holder 300, the insert 200 comprising a super-hard strike tip 210 joined to a proximate end of an insertion shaft 220. The holder comprises a shank 310 for fastening to a drum (not shown). The insertion shaft 220 comprises a portion 230 that is shrink fit into a bore 330 provided in the holder 300 for accommodating the insertion shaft 220. The insertion shaft 220 projects from an opening at a proximate end 320 of the bore 330 and abuts a seat 340 provided in the bore 330 at a distal end. The holder 300 consists substantially of steel and the insertion shaft 220 consists substantially of cemented tungsten carbide, which is substantially more abrasion resistant than steel. An external surface of the holder 300 is provided with a wear limit marker 350 for indicating a longitudinal distance D along the insertion shaft 220 from its distal end, which is located in the bore 330 and abuts the seat 340. In this example, the wear limit marker is a ridge 350 provided on the external surface of the holder 300 so that it can be inspected by an operator. In this particular example, the diameter of the bore 330 and the diameter of the insertion shaft 220 are both substantially 25 mm, differing sufficiently to provide an interference fit when the insertion shaft 220 is shrink fit in the bore 330. The maximum thickness of the part of the steel holder 300 surrounding the portion of the insertion shaft 230, measured from the inner surface of the bore 330 to the external surface bearing the wear indication ridge 350 is about 11.5 mm. The longitudinal distance D indicated by the wear limit marker 350 is about 12 mm from the distal end of the insertion shaft 220. The length of the portion 230 of the insertion shaft 220 inserted into the bore 330 is about 55 mm (and the depth of the bore from the proximate end 320 to the seat 340 at the distal end is therefore also about 55 mm).

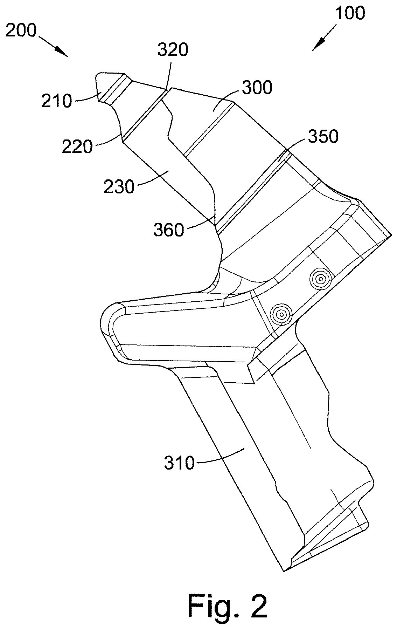

Fig. 2 schematically illustrates the example pick shown in Fig. 1A and Fig. 1 B after it has been worn in use to the point where the wear scar 360 formed on the steel holder 300 just intersects the wear indication ridge 350 (as used herein, a wear scar is a surface of a tool that has been exposed by wear in use). At this stage, the pick tool 100 should be removed from the milling apparatus (not shown) so as to reduce the risk of the insert 200 becoming detached from the holder 300 and damaging other tools on the apparatus and or being lost.

In order to reduce stresses, sharp corners at points of contact may be avoided. For example, edges and corners may be radiused or chamfered, and the edge of the bore may be provided with a radius or chamfer to reduce the risk of stress-related cracks arising.

The insertion shaft may be secured within the bore by means of a shrink fit. As used herein, a shrink fit is a kind of interference fit between components achieved by a relative size change in at least one of the components (the shape may also change somewhat). This is usually achieved by heating or cooling one component before assembly and allowing it to return to the ambient temperature after assembly. Shrink-fitting is understood to be contrasted with press-fitting, in which a component is forced into a bore or recess within another component, which may involve generating substantial frictional stress between the components. Shrink-fitting is likely to result in a region (not indicated) of the holder adjacent the bore being in a static state of circumferential tensile stress. In some examples of pick tools, a region within the holder adjacent the bore may be in a state of circumferential (or hoop) static tensile stress of at least about 300 MPa or at least about 350 MPa, and in some pick tools, the circumferential static tensile stress may be at most about 450 MPa or at most about 500 MPa. As used herein, the static stress state of a tool or element refers to the stress state of the tool or element under static conditions, such as may exist when the tool or element is not in use.

The interference between the insertion shaft and the bore of the holder is the difference in size between them, which may be expressed as a percentage of the size. For example, in arrangements where the insertion shaft (and the bore) has a generally circular cross section, the interference may be expressed as the difference in diameter as a percentage of the diameter. The dimension between the insertion shaft and the bore would be expected to be selected depending at least on the diameter of the insertion shaft, and may be at least about 0.002 per cent of the diameter of the insertion shaft. In one example, the diameter of the insertion shaft is about 2.5 cm and the interference between the insertion shaft and the bore is about 0.08 per cent of the diameter of the insertion shaft. The interference between the insertion shaft and the bore may be at most about 0.3 per cent of the diameter of the diameter of the insertion shaft. If the interference is too great, the elastic limit of the steel material of the holder may be exceeded when the steel holder is shrink-fitted onto the onto the insertion shaft, resulting in some plastic deformation of the steel adjacent the bore. If the interference is not high enough, then the shrink fit may not be sufficient for the insert to be held robustly by the holder in use.

In use, a strike tip mounted on a pick tool is driven to impact a body or formation to be degraded. In road milling or mining, a plurality of picks may be mounted onto a drum. The drum will be coupled to and driven by a vehicle, causing the drum to rotate and the picks repeatedly to strike the asphalt or rock, for example, as the drum rotates. The picks will generally be arranged so that each strike tip does not strike the body directly with the top of the apex, but somewhat obliquely to achieve a digging action in which the body is locally broken up by the strike tip. Repeated impact of the strike tip against hard material is likely to result in the abrasive wear and or fracture of the strike tip and or other parts of the pick.

Various example arrangements of the strike tip are envisaged by this disclosure, some of which are described below.

In some example arrangements, the strike structure may comprise PCD material comprising diamond grains having a mean size of at least about 15 microns. The size distribution of the diamond grains used as raw material for the PCD material may be multi-modal, and or the size distribution of the inter-grown diamond grains comprised in the PCD material may be multi-modal (the latter size distribution may be measured by means of image analysis of a polished surface of the PCD material).

At least a region of the strike structure adjacent at least a strike area of the strike end may consist of PCD material containing filler material within the interstices between diamond grains, the content of the filler material being greater than 5 weight per cent of the PCD material in the region. As used herein, a strike area is an area of the strike end that may impactively engage a body or formation to be degraded when the pick tool strikes the body or formation in use. The filler material may comprise catalyst material for diamond such as cobalt, iron, nickel and or manganese, or alloys or compounds including any of these. In some arrangements, the strike area may include the apex, and may extend substantially over the entire strike end. In some arrangements, the strike structure may consist substantially of PCD material containing filler material in interstices between diamond grains, the content of the filler material being substantially uniform throughout the strike structure, or the content of filler material may vary within a range from at least 5 weight per cent to about 20 weight per cent of the PCD material.

At least part of the strike end may be generally conical and in some arrangements the strike end may have the general form of a spherically blunted cone, in which the apex is in the general form of rounded cone tip. At least part of the strike surface or a tangent to at least part of the strike surface may be inclined at an angle to a plane tangent to a peripheral side of the strike tip, the angle being at least about 35 degrees or 40 degrees and at most about 55 degrees or 45 degrees. In one particular example, the angle may be substantially 43 degrees.

In various example arrangements, the interface boundary may be substantially planar or non-planar, and may include a depression in the substrate body and or a projection from the substrate body. For example, the interface boundary may be generally dome-shaped, defined by a convex proximate end boundary of the substrate. The proximate end boundary of the substrate may have a radius of curvature in the longitudinal plane of at least about 1 mm, at least about 2 mm or at least about 5 mm, and or at most about 20 mm. In some examples, there may be a depression (concavity) in the proximate boundary end of the substrate opposite the apex of the strike structure. In example arrangements, the thickness of the strike structure between the apex and the interface boundary opposite the apex may be at least about 2.5 mm, and or at most about 10 mm. The height of the strike tip between the apex and a distal end of the strike tip substrate opposite the apex may be at least about 9 mm. In some example arrangements, the proximate end of the substrate may have a generally dome-shaped central area at least partly surrounded by a peripheral shelf, in which the domed-shaped area may include a central depression, or need not include a central depression.

The substrate may comprise cobalt-cement tungsten carbide. In some examples, the super-hard material may be formed joined to the substrate, by which is mean that the super-hard material is produced (for example sintered) in the same general step in which the super-hard structure becomes joined to the substrate. The substrate may comprise cemented tungsten carbide material including at least about 5 weight per cent and at most about 10 weight per cent or at most about 8 weight per cent binder material, which may comprise cobalt (as measured prior to subjecting the substrate to any high-pressure, high temperature condition at which the super-hard structure may be produced; the actual binder content after such treatment is likely to be somewhat lower). The cemented carbide material may have Rockwell hardness of at least about 88 HRa; transverse rupture strength of at least about 2,500 MPa; and or magnetic saturation of at least about 8 G.cm³/g and at most about 16 G.cm³/g or at most about 13 G.cm³/g and coercivity of at least about 6 kA/m and at most about 14 kA/m. Cemented carbide having relatively low binder content is likely to provide enhanced stiffness and support for the tip in use, which may help reduce the risk of fracture, and is likely to exhibit good wear resistance.

In some example arrangements, the strike structure may consist substantially of a single grade of PCD or it may comprise a plurality of PCD grades arranged in various ways, such as in layered or lamination arrangements. The strike structure may comprise a plurality of strata arranged so that adjacent strata comprise different PCD grades, adjacent strata being directly bonded to each other by inter-growth of diamond grains.

In some example arrangements, the substrate may comprise an intermediate volume and a distal volume, the intermediate volume being disposed between the strike structure and a distal volume. The intermediate volume may be greater than the volume of the strike structure and comprise an intermediate material having a mean Young's modulus at least 60% that of the super-hard material.

Certain terms and concepts as used herein are briefly explained below.

Synthetic and natural diamond, polycrystalline diamond (PCD), cubic boron nitride (cBN) and polycrystalline cBN (PCBN) material are examples of superhard materials. As used herein, synthetic diamond, which is also called man-made diamond, is diamond material that has been manufactured. As used herein, polycrystalline diamond (PCD) material comprises an aggregation of a plurality of diamond grains, a substantial portion of which are directly inter-bonded with each other and in which the content of diamond is at least about 80 volume per cent of the material. Interstices between the diamond grains may be at least partly filled with a filler material that may comprise catalyst material for synthetic diamond, or they may be substantially empty. As used herein, a catalyst material for synthetic diamond is capable of promoting the growth of synthetic diamond grains and or the direct inter-growth of synthetic or natural diamond grains at a temperature and pressure at which synthetic or natural diamond is thermodynamically stable. Examples of catalyst materials for diamond are Fe, Ni, Co and Mn, and certain alloys including these. Bodies comprising PCD material may comprise at least a region from which catalyst material has been removed from the interstices, leaving interstitial voids between the diamond grains. As used herein, a PCD grade is a variant of PCD material characterised in terms of the volume content and or size of diamond grains, the volume content of interstitial regions between the diamond grains and composition of material that may be present within the interstitial regions. Different PCD grades may have different microstructure and different mechanical properties, such as elastic (or Young's) modulus E, modulus of elasticity, transverse rupture strength (TRS), toughness (such as so-called K₁C toughness), hardness, density and coefficient of thermal expansion (CTE).

Different PCD grades may also perform differently in use. For example, the wear rate and fracture resistance of different PCD grades may be different.

As used herein, PCBN material comprises grains of cubic boron nitride (cBN) dispersed within a matrix comprising metal or ceramic material.

Other examples of superhard materials include certain composite materials comprising diamond or cBN grains held together by a matrix comprising ceramic material, such as silicon carbide (SiC), or cemented carbide material, such as Co-bonded WC material (for example, as described in United States patents numbers 5,453,105 or 6,919,040). For example, certain SiC-bonded diamond materials may comprise at least about 30 volume per cent diamond grains dispersed in a SiC matrix (which may contain a minor amount of Si in a form other than SiC). Examples of SiC-bonded diamond materials are described in United States patents numbers 7,008,672; 6,709,747; 6,179,886; 6,447,852; and International Application publication number WO2009/013713).

## Claims

1. A pick tool (100) for pavement degradation or mining, comprising an insert (200) and a holder (300), the insert (200) comprising a super-hard strike tip (210) joined to a proximate end of an insertion shaft (220), the insertion shaft (220) secured by an interference fit within a bore (330) provided in the holder (300), the insertion shaft (220) having a longitudinal axis and a distal end of the insertion shaft positioned at an insertion depth within the bore (330),
**characterized in that** a wear limit marker (350) is provided on an external surface of the holder (300) and positioned to correspond to an axial distance along the insertion shaft (220) from the distal end,
the distance being at least 20 per cent and at most 35 per cent of the insertion depth.

2. A pick tool (100) as claimed in claim 1, in which the insertion shaft (220) is shrink fit within the bore (330).

3. A pick tool (100) as claimed in claim 1 or 2, in which the strike tip comprises PCD material joined to a cemented carbide substrate.

4. A pick tool (100) as claimed in any of the preceding claims, in which the insertion depth is at least 30 mm and at most 70 mm.

5. A pick tool (100) as claimed in any of the preceding claims, in which the longitudinal distance is at least 6 mm and at most 21 mm.

6. A pick tool (100) as claimed in any of the preceding claims, in which the wear limit marker (350) is positioned on a side of the holder.

7. A pick tool (100) as claimed in any of the preceding claims, in which there is more than one wear limit marker arranged to indicate at least upper and lower wear limits.

8. A pick tool (100) as claimed in any of the preceding claims, in which the wear limit marker (350) is visible to the naked eye.

9. A pick tool (100) as claimed in any of the preceding claims, in which the wear limit marker (350) is configured and dimensioned for detection by a detection mechanism provided for this purpose.

10. A pick tool (100) as claimed in any of the preceding claims, in which the wear limit marker (350) is formed integrally with the holder.

11. A pick tool (100) as claimed in any of the preceding claims, in which the insertion shaft (220) comprises cemented tungsten carbide having Rockwell hardness of at least 90 HRa and transverse rupture strength of at least about 2,500 MPa.

12. A method of using a pick tool (100) as claimed in any of the preceding claims, the method including attaching the pick tool (100) to a carrier apparatus for degrading a construction or body, using the pick tool (100) to degrade the construction or body, examining the pick tool (100) to determine whether the holder (300) has worn away to the (300) extent where a wear scar produced on the holder (300) in use extends from the proximate end of the bore (330) to a position on the holder (300) indicated by the wear limit marker (350).

13. A method as claimed in claim 12, including removing the insertion shaft (220) from the holder (300) and shrink fitting the insertion shaft (220) into a new holder for re-use.

14. A method as claimed in claim 13, including processing the removed insertion shaft (220) to provide a refurbished insertion shaft (220), providing a new holder (300) having a bore (330) configured to accommodate the refurbished insertion shaft (220) and shrink fitting the refurbished insertion shaft (220) into the bore (330) of the new holder (300).

15. A method as claimed in any of claims 12 to 14, including removing the strike tip (210) from the insertion shaft (220) and attaching the strike tip (210) to a new insertion shaft (220) for re-use.

## Patentansprüche

1. Hack- und/oder Meißelwerkzeug (100) für die Straßenbelagabtragung oder den Bergbau, das einen Einsatz (200) und eine Halterung (300) aufweist, wobei der Einsatz (200) eine extrem harte Schlagspitze (210) aufweist, die mit einem benachbarten Ende eines Einsatzschafts (220) verbunden ist, wobei der Einsatzschaft (220) durch eine Übermaßpassung innerhalb einer Bohrung (330), die in der Halterung (300) bereitgestellt ist, befestigt ist, wobei der Einsatzschaft (220) eine Längsachse und ein distales Ende des Einsatzschafts in einer Einsatztiefe innerhalb der Bohrung (330) hat,
**dadurch gekennzeichnet, dass** eine Verschleißgrenzmarkierung (350) auf einer äußeren Oberfläche der Halterung (300) bereitgestellt ist und derart positioniert ist, dass sie einem axialen Abstand von dem distalen Ende entlang des Einsatzschafts (220) entspricht, wobei der Abstand wenigstens 20 Prozent und höchstens 35 Prozent der Einsatztiefe ist.

2. Hack- und/oder Meißelwerkzeug (100) nach Anspruch 1, wobei der Einsatzschaft (220) in die Bohrung (330) schrumpfgepasst ist.

3. Hack- und/oder Meißelwerkzeug (100) nach Anspruch 1 oder 2, wobei die Schlagspitze polykristallines Diamant-Material aufweist, das mit einem Hartmetallsubstrat verbunden ist.

4. Hack- und/oder Meißelwerkzeug (100) nach einem der vorhergehenden Ansprüche, wobei die Einsatztiefe wenigstens 30 mm und höchstens 70 mm ist.

5. Hack- und/oder Meißelwerkzeug (100) nach einem der vorhergehenden Ansprüche, wobei der Längsabstand wenigstens 6 mm und höchstens 21 mm ist.

6. Hack- und/oder Meißelwerkzeug (100) nach einem der vorhergehenden Ansprüche, wobei die Verschleißgrenzmarkierung (350) auf einer Seite der Halterung positioniert ist.

7. Hack- und/oder Meißelwerkzeug (100) nach einem der vorhergehenden Ansprüche, wobei es mehr als eine Verschleißgrenzmarkierung gibt, die eingerichtet sind, um wenigstens obere und untere Verschleißgrenzen anzuzeigen.

8. Hack- und/oder Meißelwerkzeug (100) nach einem der vorhergehenden Ansprüche, wobei die Verschleißgrenzmarkierung (350) mit bloßem Auge sichtbar ist.

9. Hack- und/oder Meißelwerkzeug (100) nach einem der vorhergehenden Ansprüche, wobei die Verschleißgrenzmarkierung (350) für die Erfassung durch einen Erfassungsmechanismus, der für diesen Zweck bereitgestellt ist, konfiguriert und bemessen ist.

10. Hack- und/oder Meißelwerkzeug (100) nach einem der vorhergehenden Ansprüche, wobei die Verschleißgrenzmarkierung (350) integral mit der Halterung ausgebildet ist.

11. Hack- und/oder Meißelwerkzeug (100) nach einem der vorhergehenden Ansprüche, wobei der Einsatzschaft (220) verfestigtes Wolframcarbid mit einer Rockwell-Härte von wenigstens 90 HRa und einer Biegefestigkeit von wenigstens etwa 2500 MPa aufweist.

12. Verfahren zur Verwendung eines Hack- und/oder Meißelwerkzeugs (100) nach einem der vorhergehenden Ansprüche, wobei das Verfahren umfasst: Befestigen des Hack- und/oder Meißelwerkzeugs an einer Trägervorrichtung für die Abtragung eines Bauwerks oder Körpers, Verwenden des Hack- und/oder Meißelwerkzeugs (100) zum Abtragen des Bauwerks oder Körpers, Untersuchen des Hack- und/oder Meißelwerkzeugs (100), um zu bestimmen, ob die Halterung (300) in dem Maße verschlissen wurde, dass sich eine Abnutzungskerbe, die unter Verwendung auf der Halterung (300) erzeugt wird, von dem benachbarten Ende der Bohrung (330) zu einer Position auf der Halterung (300), die durch die Verschleißgrenzmarkierung (350) angezeigt wird, erstreckt.

13. Verfahren nach Anspruch 12, das das Entfernen des Einsatzschafts (220) von der Halterung (300) und das Schrumpfpassen des Einsatzschafts (220) in eine neue Halterung für die Wiederverwendung umfasst.

14. Verfahren nach Anspruch 13, das umfasst: die Bearbeitung des entfernten Einsatzschafts (220), um einen instandgesetzten Einsatzschaft (220) bereitzustellen, das Bereitstellen einer neuen Halterung (300) mit einer Bohrung (330), die konfiguriert ist, den instandgesetzten Einsatzschaft (220) aufzunehmen, und Schrumpfpassen des instandgesetzten Einsatzschafts (220) in die Bohrung (330) der neuen Halterung (300).

15. Verfahren nach einem der Ansprüche 12 bis 14, das das Entfernen der Schlagspitze (210) von dem Einsatzschaft (220) und das Befestigen der Schlagspitze (210) an einem neuen Einsatzschaft (220) für die Wiederverwendung umfasst.

## Revendications

1. Outil de piochage (100) pour une dégradation de la chaussée ou des applications minières, comprenant un insert (200) et un support (300) ; l'insert (200) comprenant une pointe de frappe super dure (210) jointe à une extrémité proximale d'un arbre d'insertion (220), l'arbre d'insertion (220) étant fixé par un ajustement avec serrage dans un alésage (330) prévu dans le support (300) ; l'arbre d'insertion (220) ayant un axe longitudinal et une extrémité distale de l'arbre d'insertion étant positionnée à une profondeur d'insertion dans l'alésage (330),
**caractérisé en ce qu'**un marqueur de limite d'usure (350) est prévu sur une surface externe du support (300) et positionné pour correspondre à une distance axiale le long de l'arbre d'insertion (220) à partir de l'extrémité distale,
la distance étant d'au moins 20 pour cent et d'au plus 35 pour cent de la profondeur d'insertion.

2. Outil de piochage (100) tel que revendiqué dans la revendication 1, dans lequel l'arbre d'insertion (220) est ajusté par contraction dans l'alésage (330).

3. Outil de piochage (100) tel que revendiqué dans la revendication 1 ou 2, dans lequel la pointe de frappe comprend un matériau PCD joint à un substrat de carbure cémenté.

4. Outil de piochage (100) tel que revendiqué dans l'une des revendications précédentes, dans lequel la profondeur d'insertion est d'au moins 30 mm et d'au plus 70 mm.

5. Outil de piochage (100) tel que revendiqué dans l'une des revendications précédentes, dans lequel la distance longitudinale est d'au moins 6 mm et d'au plus 21 mm.

6. Outil de piochage (100) tel que revendiqué dans l'une des revendications précédentes, dans lequel le marqueur de limite d'usure (350) est positionné sur un côté du support.

7. Outil de piochage (100) tel que revendiqué dans l'une des revendications précédentes, dans lequel plus d'un marqueur de limite d'usure est agencé pour indiquer au moins des limites d'usure supérieure et inférieure.

8. Outil de piochage (100) tel que revendiqué dans l'une des revendications précédentes, dans lequel le marqueur de limite d'usure (350) est visible à l'oeil nu.

9. Outil de piochage (100) tel que revendiqué dans l'une des revendications précédentes, dans lequel le marqueur de limite d'usure (350) est configuré et dimensionné pour une détection par un mécanisme de détection prévu à cet effet.

10. Outil de piochage (100) tel que revendiqué dans l'une des revendications précédentes, dans lequel le marqueur de limite d'usure (350) est formé d'un seul tenant avec le support.

11. Outil de piochage (100) tel que revendiqué dans l'une des revendications précédentes, dans lequel l'arbre d'insertion (220) comprend du carbure de tungstène cémenté ayant une dureté Rockwell d'au moins 90 HRa et une résistance à la rupture transversale d'au moins environ 2500 MPa.

12. Procédé d'utilisation d'un outil de piochage (100) tel que revendiqué dans l'une des revendications précédentes, le procédé comportant le fait d'attacher l'outil de piochage (100) à un appareil porteur pour la dégradation d'une construction ou d'un corps, d'utiliser l'outil de piochage (100) pour dégrader la construction ou le corps, d'examiner l'outil de piochage (100) pour déterminer si le support (300) s'est usé au point où une marque d'usure produite sur le support (300) lors de l'utilisation s'étend à partir de l'extrémité proximale de l'alésage (330) jusqu'à une position sur le support (300) indiquée par le marqueur de limite d'usure (350).

13. Procédé tel que revendiqué dans la revendication 12, comportant le retrait de l'arbre d'insertion (220) du support (300) et l'ajustage par contraction de l'arbre d'insertion (220) dans un nouveau support pour une réutilisation.

14. Procédé tel que revendiqué dans la revendication 13, comportant le fait de traiter l'arbre d'insertion retiré (220) pour fournir un arbre d'insertion rénové (220), de fournir un nouveau support (300) ayant un alésage (330) configuré pour recevoir l'arbre d'insertion rénové (220) et d'ajuster par contraction l'arbre d'insertion rénové (220) dans l'alésage (330) du nouveau support (300).

15. Procédé tel que revendiqué dans l'une des revendications 12 à 14, comportant le fait de retirer la pointe de frappe (210) de l'arbre d'insertion (220) et d'attacher la pointe de frappe (210) à un nouvel arbre d'insertion (220) pour une réutilisation.
